# EUROPEAN PATENT APPLICATION

(11) **EP 2 544 031 A1**
(43) Date of publication of application: **09.01.2013**
(21) Application number: 11750607.1
(22) Date of filing: 28.02.2011
(51) Int. Cl.: G02B 5/08, C09D 127/12, F24J 2/10

(54) **COATING COMPOSITION FOR SOLAR-HEAT-COLLECTING REFLECTIVE PLATE, SOLAR-HEAT-COLLECTING REFLECTIVE PLATE, AND PROCESS FOR PRODUCING SAME**

(30) Priority: 03.03.2010 JP 2010046757
(71) Applicant: Asahi Glass Company, Limited, Tokyo 100-8405 (JP)
(72) Inventor: SAITO, Shun, Tokyo 100-8405 (JP); AIKAWA, Masataka, Tokyo 100-8405 (JP); TAKAYANAGI, Takashi, Tokyo 100-8405 (JP); MASUDA, Sho, Tokyo 100-8405 (JP)
(74) Representative: Müller-Boré & Partner Patentanwälte
(86) International application number: PCT/JP2011/054529
(87) International publication number: WO 2011/108497

(57) **Abstract**

The present invention is to provide a coating composition for surface coating capable of forming a cured coating film layer that protects a reflective substrate of a solar heat-collecting reflective plate and that is excellent in the impact resistance and the weather resistance such as the heat resistance and the water resistance, as well as a solar heat-collecting reflective plate having such a cured coating film layer, and a process for its production. A coating composition for surface coating to be used for the production of a solar heat-collecting reflective plate having a reflective substrate made of metal, which comprises a fluoropolymer (A) having units (A1) derived from a fluoroolefin and units (A2) having a crosslinkable group. Further, a solar heat-collecting reflective plate having a cured coating film layer formed from the coating composition for surface coating, and a process for its production.

## Description

### TECHNICAL FIELD

The present invention relates to a coating composition for surface coating to be used for the production of a solar heat-collecting reflective plate, and a solar heat-collecting reflective plate formed by the coating composition for surface coating and a process for its production.

### BACKGROUND ART

In recent years, from the viewpoint of global environment problems, there have been many attempts to suppress use of fossil fuels, and as one of them, a solar heat-collecting system which utilizes solar heat is known. As such a solar heat-collecting system, for example, a solar heat-collecting system may be mentioned which comprises a heat collection tube provided with a heat medium such as water or an inorganic salt, and a reflective plate to reflect sunlight to collect it in the heat collection tube. In such a solar heat-collecting system, sunlight is reflected by the reflective plate and collected in the heat collection tube, and the heat medium in the heat collection tube is heated by the heat of such sunlight to obtain thermal energy.

In such a solar heat-collecting system, as the reflective plate to reflect sunlight, a solar heat-collecting reflective plate is widely used that has a mirror-finished surface (reflective surface) formed at the surface of a reflective substrate made of metal such as aluminum, an aluminum alloy or stainless steel. Such a solar-heat collecting reflective plate is used outdoors, and therefore, it had been attempted to protect the reflective surface for the purpose of maintaining a high reflectance for a long period of time. For example, the following solar heat-collecting reflective plates have been disclosed.
(i) A solar heat-collecting reflective plate having a protective layer formed by applying a tetrafluoroethylene/hexafluoropropylene copolymer resin on a reflective substrate made of aluminum or an aluminum alloy (Patent Document 1).
(ii) A solar heat-collecting reflective plate having a protective layer made of a sol-gel lacquer of polysiloxane formed on a reflective substrate made of aluminum or an aluminum alloy (Patent Document 2).

### PRIOR ART DOCUMENTS

### PATENT DOCUMENTS

Patent Document 1: JP-A-58-64452
Patent Document 2: JP-A-2003-532925

### DISCLOSURE OF INVENTION

### TECHNICAL PROBLEM

Like the solar heat-collecting reflective plate (i) or (ii) to be used outdoors for a long period of time, a solar heat-collecting reflective plate having a protective layer is used as exposed in a severe environment of e.g. desert areas and is likely to have the following problems.
(1) The protective layer is peeled from the reflective substrate by expansion or shrinkage due to heat or by expansion due to moisture absorption or water absorption of the protective layer.
(2) The reflective substrate made of metal is oxidized by moisture, water, etc. passing through the protective layer, whereby the reflectance at the reflective surface deteriorates.
(3) The surface of the reflective plate is damaged by sunlight or impingement of sand, etc., whereby the reflectance of the reflective plate deteriorates.
(4) The protective layer is deteriorated by sunlight.

Therefore, the protective layer of the solar heat-collecting reflective plate is required to be excellent in durability such as heat resistance, moisture resistance, water resistance, etc. in order to solve the problems (1) and (2), to be excellent in scratch resistance and impact resistance in order to solve the problem (3), and to be excellent in weather resistance in order the solve the problem (4).

However, with the protective layer of the solar heat-collecting reflective plate (i) or (ii), it is difficult to sufficiently increase the durability, weather resistance, scratch resistance and impact resistance. Especially, the reflective surface side of the solar heat-collecting reflective plate is exposed to a high temperature, and it is difficult to impart to the protective layer sufficient heat resistance to as to be durable under such high temperature conditions. Further, it is also difficult to impart scratch resistance and impact resistance to the protective layer in the solar heat-collecting reflective plate (i) or (ii) so that deterioration by impingement of sand, etc. can be prevented for a long period of time.

Further, in a case where the non-reflective surface side of the reflective substrate made of metal is exposed, the solar heat-collecting reflective plate is required to have protection also with respect to the non-respective surface side like the reflective surface side by increasing the durability, weather resistance, scratch resistance and impact resistance.

Patent Document 1 discloses that a tetrafluoroethylene/hexafluoropropylene copolymer is used as a protective layer for a reflective surface of a reflective substrate.

The tetrafluoroethylene/hexafluoropropylene copolymer has high heat resistance and high weather resistance, and its water absorptivity is low, and it is, therefore, considered to be suitable as a material for a protective layer of a reflective substrate. However, the tetrafluoroethylene/hexafluoropropylene copolymer has a color of white to milky white, and its surface is susceptible to scratching, and therefore, the reflectance of the reflective plate is low. Further, the adhesion to the reflective substrate is also poor, and the tetrafluoroethylene/hexafluoropropylene copolymer is likely to be peeled from the reflective substrate during exposure for a long period of time.

Patent Document 2 discloses that a sol-gel lacquer of polysiloxane is used as a protective layer on a reflective substrate.

The sol-gel lacquer of polysiloxane has high heat resistance and scratch resistance, but the weather resistance is poor, and it is likely that during the use for a long period of time, the protective layer deteriorates, and the reflectance of the reflective plate decreases.

It is an object of the present invention to provide a coating composition for surface coating for a solar heat-collecting reflective plate, which is capable of forming a cured coating film excellent in durability such as heat resistance, water resistance, etc. and also excellent in weather resistance, scratch resistance and impact resistance, as a protective layer to protect a reflective substrate made of metal, of a solar heat-collecting reflective plate.

Further, another object of the present invention is to provide a solar heat-collecting reflective plate having a cured coating film layer excellent in durability such as heat resistance, water resistance, etc. and also excellent in weather resistance, scratch resistance and impact resistance, and a process for its production.

### SOLUTION TO PROBLEM

The present invention has adopted the following constructions in order to solve the above problems.
[1] A coating composition for surface coating to be used for the production of a solar heat-collecting reflective plate having a reflective substrate made of metal, which comprises a fluoropolymer (A) having units (A1) derived from a fluoroolefin and units (A2) having a crosslinkable group.
[2] The coating composition for surface coating according to [1], which is a coating composition to be used for forming a cured coating film layer on a light reflective surface side of the reflective substrate.
[3] The coating composition for surface coating according to [2], which is a coating composition to be used for forming a transparent cured coating film layer.
[4] The coating composition for surface coating according to any one of [1] to [3], wherein the units (A2) having a crosslinkable group are units derived from a monomer (a2) having a crosslinkable group.
[5] The coating composition for surface coating according to any one of [1] to [4], wherein the units (A1) derived from a fluoroolefin are units derived from at least one fluoroolefin selected from the group consisting of tetrafluoroethylene, chlorotrifluoroethylene, hexafluoropropylene, vinylidene fluoride and vinyl fluoride.
[6] The coating composition for surface coating according to any one of [1] to [5], wherein the crosslinkable group is at least one crosslinkable group selected from the group consisting of a hydroxy group, a carboxy group, an amino group, an epoxy group, an alkoxysilyl group and an isocyanate group.
[7] The coating composition for surface coating according to any one of [1] to [6], which comprises the fluoropolymer (A) and a curing agent (B).
[8] The coating composition for surface coating according to [7], wherein the fluoropolymer (A) is a polymer having at least one crosslinkable group selected from an alkoxysilyl group and a hydroxy group, and the curing agent (B) is a metal alkoxide (B-1).
[9] The coating composition for surface coating according to [7], wherein the fluoropolymer (A) is a polymer having a hydroxy group, and the curing agent (B) is at least one curing agent selected from the group consisting of an isocyanate type curing agent (B-2), a blocked isocyanate type curing agent (B-3) and an amino resin (B-4).
[10] The coating composition for surface coating according to [1], which is a coating composition to be used for forming a cured coating film layer on a non-reflective surface side of the reflective substrate.
[11] The coating composition for surface coating according to [10], which is a coating composition to be used for forming an opaque cured coating film layer.
[12] A process for producing a solar heat-collecting reflective plate, which comprises forming a layer of the coating composition for surface coating as defined in any one of [1] to [9] on a light reflective surface side of a reflective substrate made of metal, and then curing the coating composition to form a cured coating film layer.
[13] A solar heat-collecting reflective plate having a reflective substrate made of metal, and a cured coating film layer formed on a light reflective surface side of the reflective substrate, wherein the cured coating film layer is a cured coating film layer formed from the coating composition for surface coating as defined in any one of [1] to [9].
[14] A solar heat-collecting reflective plate having a reflective substrate made of metal, and a cured coating film layer formed on a non-reflective surface side of the reflective substrate, wherein the cured coating film layer is a cured coating film layer formed from the coating composition for surface coating as defined in [10] or [11].
[15] The solar heat-collecting reflective plate according to [13] or [14], wherein the reflective substrate made of metal is a substrate in the form of a plate made of aluminum or an aluminum alloy, and it is a reflective substrate wherein the surface on the light reflective surface side of the substrate is mirror-finished, or a reflective substrate wherein a thin film layer is formed on the light reflective surface side of the substrate.

### ADVANTAGEOUS EFFECTS OF INVENTION

By using the coating composition for surface coating of the present invention, it is possible to form a cured coating film layer which is excellent in durability such as heat resistance, water resistance, etc. and also excellent in weather resistance, scratch resistance and impact resistance, as a protective layer for a reflective substrate of a solar heat-collecting reflective plate.

Further, in the solar heat-collecting reflective plate of the present invention, the reflective substrate is protected by a cured coating film layer which is excellent in durability such as heat resistance, water resistance, etc. and also excellent in weather resistance, scratch resistance and impact resistance.

Further, according to the process for producing a solar heat-collecting reflective plate of the present invention, it is possible to obtain a solar heat-collecting reflective plate wherein the reflective substrate is protected by a cured coating film layer which is excellent in durability such as heat resistance, water resistance, etc. and also excellent in weather resistance, scratch resistance and impact resistance.

### BRIEF DESCRIPTION OF DRAWINGS

Fig. 1 is a cross-sectional view illustrating an embodiment of the solar heat-collecting reflective plate of the present invention.
Fig. 2 is a cross-sectional view illustrating another embodiment of the solar heat-collecting reflective plate of the present invention.

### DESCRIPTION OF EMBODIMENTS

### [Coating composition for surface coating for solar heat-collecting reflective plate]

The coating composition for surface coating to be used for the production of a solar heat-collecting reflective plate of the present invention (hereinafter referred to as "the coating composition") is a coating composition to be used for forming a layer of the coating composition on the surface of a reflective substrate made of metal and forming a cured coating film layer by curing the coating composition of such a layer, and it comprises a fluoropolymer (A) having units (A1) derived from a fluoroolefin and units (A2) having a crosslinkable group. In the present invention, polymerized units to be formed by polymerization of a monomer, and units to be formed by chemical conversion of some or all of functional groups of polymerized units formed by polymerization of a monomer to other functional groups (hereinafter referred to as functional group-conversion) will be generally referred to as "units".

Further, in this specification, the term (meth)acrylic acid represents at least one of acrylic acid and methacrylic acid.

The coating composition of the present invention is used as a coating composition to be applied on the reflective surface side of the reflective substrate, since a cured coating film to be formed from the coating composition is excellent in durability such as heat resistance, water resistance, etc. and also excellent in weather resistance, scratch resistance and impact resistance. Further, also with respect to the non-reflective surface (back surface) of the reflective substrate, the same properties as the reflective surface, particularly durability, are required, and therefore, the coating composition of the present invention may be used also as a coating composition to be applied to the non-reflective surface side.

The coating composition to be applied on the reflective surface side of the reflective substrate is required to be a coating composition which is capable of forming a cured coating film layer having high transparency to sunlight. Particularly, the reflective plate is one to utilize reflected sunlight as a heat source, and therefore, the reflective plate is required to have high reflectivity particularly for heat ray (infrared light) in sunlight. If the heat ray absorption property of the reflective plate is high, the reflective plate itself tends to absorb the heat ray, whereby the performance of reflected light as a heat source tends to be low. The cured coating film to be formed from the coating composition of the present invention not only is excellent in durability, etc. but also has high transparency to sunlight, and thus is suitable as a protective film for the reflective surface.

On the other hand, as a protective film on the non-reflective surface side of the reflective substrate, transparency is not required, but it may be transparent. As the protective film on the non-reflective surface side, an opaque protective film containing a pigment such as an extender pigment is superior in durability, etc. in many cases. Therefore, the coating composition to be applied on the non-reflective surface side may be a coating composition which is capable of forming an opaque cured coating film layer containing e.g. a pigment.

### [Fluoropolymer (A)]

In the present invention, the fluoropolymer (A) is a fluoropolymer which is reacted with the after-described curing agent (B) to form a crosslinked structure, and thereby cured to form a cured coating film layer. Further, in a case where the fluoropolymer (A) has the after-described alkoxysilyl group, even if no curing agent is present, the alkoxysilyl groups may be condensed to one another to form a crosslinked structure for curing. The fluoropolymer (A) comprises units (A1) derived from a fluoroolefin and units (A2) having a crosslinkable group.

### (Units (A1))

The units (A1) are units derived from a fluoroolefin.

The fluoroolefin is a compound having at least one hydrogen atom in an olefin hydrocarbon (general formula: CₙH₂ₙ) substituted by a fluorine atom.

The number of carbon atoms in the fluoroolefin is preferably from 2 to 8, more preferably from 2 to 6, particularly preferably 2 or 3.

The number of fluorine atoms in the fluoroolefin (hereinafter referred to as "the fluorine addition number" is preferably at least 2, more preferably from 3 to 6. When the fluorine addition number is at least 2, the weather resistance of the cured coating film layer will be improved. In the fluoroolefin, at least one hydrogen atom not substituted by a fluorine atom may be substituted by a chlorine atom.

The fluoroolefin is such that among hydrogen atoms in an olefin hydrocarbon, the proportion of hydrogen atoms substituted by fluorine atoms is preferably at least 50%, more preferably at least 75%.

The fluoroolefin is preferably tetrafluoroethylene, chlorotrifluoroethylene, hexafluoropropylene, vinylidene fluoride or vinyl fluoride, and tetrafluoroethylene or chlorotrifluoroethylene is more preferred.

As the fluoroolefin, one type may be used alone, or two or more types may be used in combination.

Units (A1) derived from a fluoroolefin are preferably units derived from at least one fluoroolefin selected from the group consisting of tetrafluoroethylene, chlorotrifluoroethylene, hexafluoropropylene, vinylidene fluoride and vinyl fluoride.

### (Units (A2))

The units (A2) are units having a crosslinkable group.

The crosslinkable group is preferably at least one member selected from the group consisting of a hydroxy group, a carboxy group, an amino group, an epoxy group, an alkoxysilyl group and an isocyanate group. A hydroxy group or an alkoxysilyl group is more preferred, since it is thereby easy to satisfy excellent durability, weather resistance, scratch resistance and impact resistance.

The units (A2) may, for example, be the following units (A2-1) and units (A2-2).
Units (A2-1): Units derived from a monomer (a2) having a crosslinkable group.
Units (A2-2): Units having a crosslinkable group, which are formed by a functional group conversion of a polymer. That is, they are units which are formed by a method wherein a polymer comprising units having a reactive functional group is reacted with a compound having a crosslinkable group and a functional group reactive to bond with the reactive functional group, thereby to convert the reactive functional group to the crosslinkable group.

### Units (A2-1):

A monomer (a2) to form units (A2-1) is a compound having a crosslinkable group as well as a polymerizable reactive group. The polymerizable reactive group is preferably an ethylenic unsaturated group such as a vinyl group, an allyl group or a (meth)acryloyl group. That is, the monomer (a2) is preferably a compound having a crosslinkable group and an ethylenic unsaturated group.

The number of carbon atoms in the monomer (a2) is preferably from 2 to 10, more preferably from 3 to 6.

The monomer (a2) may have an ether bond, an ester bond, an urethane bond or an amide bond in a carbon-carbon bond other than the double bond of the ethylenic unsaturated bond. Further, the monomer (a2) may be in the form of a straight chain or a branched chain.

As the monomer (a2), the following monomers (a2-1) to (a2-6) may, for example, be mentioned.
Monomer (a2-1): Hydroxy group-containing monomer
Monomer (a2-2): Carboxy group-containing monomer
Monomer (a2-3): Alkoxysilyl group-containing monomer
Monomer (a2-4): Amino group-containing monomer
Monomer (a2-5): Epoxy group-containing monomer
Monomer (a2-6): Isocyanate group-containing monomer

The monomer (a2-1) may, for example, be a hydroxyalkyl vinyl ether such as 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether or 6-hydroxyhexyl vinyl ether; an ethylene glycol monovinyl ether such as diethylene glycol monovinyl ether, triethylene glycol monovinyl ether or tetraethylene glycol monovinyl ether; a hydroxyalkyl allyl ether such as hydroxyethyl allyl ether, hydroxypropyl allyl ether, 2-hydroxyethyl allyl ether, 4-hydroxybutyl allyl ether or glycerol monoallyl ether; a hydroxyalkyl vinyl ester such as hydroxyethyl vinyl ester or hydroxybutyl vinyl ester; a hydroxyalkyl allyl ester, such as hydroxyethyl allyl ester or hydroxybutyl allyl ester; or a (meth)acrylic acid hydroxyalkyl ester such as hydroxyethyl (meth)acrylate.

As the monomer (a2-1), one type may be used alone, or two or more types may be used in combination.

The monomer (a2-2) may, for example, be an unsaturated carboxylic acid such as 3-butenoic acid, 4-pentenoic acid, 2-hexenoic acid, 3-hexenoic acid, 5-hexenoic acid, 2-heptenoic acid, 3-heptenoic acid, 6-heptenoic acid, 3-optenoic acid, 7-optenoic acid, 2-nonenoic acid, 3-nonenoic acid, 8-nonenoic acid, 9-decenoic acid, 10-undecenoic acid, acrylic acid, methacrylic acid, vinyl acetic acid, crotonic acid, or cinnamic acid; a saturated carboxylic acid vinyl ether such as vinyloxy valeric acid, 3-vinyloxy propionic acid, 3-(2-vinyloxy butoxycarbonyl) propionic acid, or 3-(2-vinyloxy ethoxycarbonyl) propionic acid; a saturated carboxylic acid allyl ether such as allyloxy valeric acid, 3-allyloxy propionic acid, 3-(2-allyloxy butoxycarbonyl) propionic acid or 3-(2-allyloxy ethoxycarbonyl) propionic acid; a carboxylic acid vinyl ether such as 3-(2-vinyloxy ethoxycarbonyl) propionic acid or 3-(2-vinyloxy butoxycarbonyl) propionic acid; a saturated polybasic carboxylic acid monovinyl ester such as monovinyl adipate, monovinyl succinate, vinyl phthalate or vinyl pyromellitate; an unsaturated dicarboxylic acid or its intramolecular acid anhydride, such as itaconic acid, maleic acid, fumaric acid, maleic anhydride or itaconic anhydride; or an unsaturated carboxylic acid monoester such as itaconic acid monoester, fumaric acid monoester or maleic acid monoester.

Further, the monomer (a2-2) may be a monomer obtainable by reacting a compound having an acid anhydride group with the monomer (a2-1).

As the monomer (a2-2), one type may be used alone, or two or more types may be used in combination.

The monomer (a2-3) may, for example, be an acrylic acid ester or a methacrylic acid ester, such as CH₂=CHCO₂(CH₂)₃Si(OCH₃)₃, CH₂=CHCO₂(CH₂)₃Si(OC₂H₅)₃, CH₂=C(CH₃)CO₂(CH₂)₃Si(OCH₃)₃, CH₂=C(CH₃)CO₂(CH₂)₃Si(OC₂H₅)₃, CH₂=CHCO₂(CH₂)₃SiCH₃(OC₂H₅)₂, CH₂=C(CH₃)CO₂(CH₂)₃SiC₂H₅(OCH₃)₂, CH₂=C(CH₃)CO₂(CH₂)₃Si(CH₃)₂(OC₂H₅), CH₂=C(CH₃)CO₂(CH₂)₃Si(CH₃)₂OH, CH₂=CH(CH₂)₃Si(OCOCH₃)₃, CH₂=C(CH₃)CO₂(CH₂)₃SiC₂H₅(OCOCH₃)₂, CH₂=C(CH₃)CO₂(CH₂)₃SiCH₃(N(CH₃)COCH₃)₂, CH₂=CHCO₂(CH₂)₃SiCH₃[ON(CH₃)C₂H₅]₂ or CH₂=C(CH₃)CO₂(CH₂)₃SiC₆H₅[ON(CH₃)C₂H₅]₂; a vinyl silane such as CH₂=CHSi[ON=C(CH₃)(C₂H₅)]₃, CH₂=CHSi(OCH₃)₃, CH₂=CHSi(OC₂H₅)₃, CH₂=CHSiCH₃(OCH₃)₂, CH₂=CHSi(OCOCH₃)₃, CH₂=CHSi(CH₃)₂(OC₂H₅), CH₂=CHSi(CH₃)₂SiCH₃(OCH₃)₂, CH₂=CHSiC₂H₅(OCOCH₃)₂, CH₂=CHSiCH₃[ON(CH₃)C₂H₅]₂, vinyl trichlorosilane, or a partial hydrolyzate thereof; or a vinyl ether such as trimethoxysilylethyl vinyl ether, triethoxysilylethyl vinyl ether, trimethoxysilylbutyl vinyl ether, methyldimethoxysilylethyl vinyl ether, trimethoxysilylpropyl vinyl ether or triethoxysilylpropyl vinyl ether.

Further, the monomer (a2-3) may be a monomer obtainable by reacting a compound having an alkoxysilyl group and a functional group reactive with a hydroxy group, with the monomer (a2-1). For example, a monomer (a2-3A) having an alkoxysilyl group may be mentioned which is obtainable by a reaction of a hydroxy group of the monomer (a2-1) with a compound represented by the following formula (1) (hereinafter referred to as "the compound (1)".

OCN(CH₂)_{q}SiXₚR¹₃₋ₚ (1)

(In the above formula (1), R¹ is a hydrogen atom or a C₁₋₁₀ monovalent hydrocarbon group, X is a C₁₋₅ alkoxy group, p is an integer of from 1 to 3, and q is an integer of from 1 to 5.)

By the reaction of the hydroxy group of the monomer (a2-1) with the compound (1), a urethane bond (-NHC(=O)-) is formed thereby to obtain a monomer (a2-3A) having a group represented by the formula -NHC(=O)(CH₂)_{q}SiXₚR₃₋ₚ.

In the compound (1), R¹ is a hydrogen atom or a C₁₋₁₀ monovalent hydrocarbon group. When the number of carbon atoms in the monovalent hydrocarbon group in R¹ is at most 10, the compound (1) is prevented from becoming too bulky, whereby it is easy to prevent deterioration of the condensation reaction of the alkoxy group (X) during the curing of the coating film by a steric hindrance. Therefore, the curing property of the coating film will be good, and it becomes easy to obtain excellent durability, weather resistance, scratch resistance and impact resistance.

R¹ is preferably a C₁₋₁₀ monovalent hydrocarbon group, more preferably a C₁₋₅ monovalent hydrocarbon group, particularly preferably a methyl group or an ethyl group.

X is a C₁₋₅ alkoxy group, preferably an ethoxy group or a methoxy group. When the number of carbon atoms in X is at most 5, the alcohol component to be formed by the crosslinking reaction with the curing agent (B) tends to be readily volatile. Therefore, it becomes easy to prevent deterioration of the durability such as heat resistance, water resistance or moisture resistance, the weather resistance, the scratch resistance and the impact resistance by an alcohol component remaining in a cured coating film layer after the curing.

p is an integer of from 1 to 3, preferably 3.

q is an integer of from 1 to 5, preferably from 2 to 4.

Specific examples of the compound (1) include 3-isocyanate propyltrimethoxysilane (X=methoxy group, p=3, and q=3), 2-isocyanate propyltriethoxysilane (X=ethoxy group, p=3, and q=3), 3-isocyanate propylmethyldimethoxysilane (X=methoxy group, R¹=methyl group, p=2, and q=3), 3-isocyanate propylmethyldiethoxysilane (X=ethoxy group, R¹=methyl group, p=2, and q=3), 3-isocyanate propyldimethylmethoxysilane (X=methoxy group, R¹=methyl group, p=1, and q=3), 3-isocyanate propyldimethylethoxysilane (X=ethoxy group, R¹=methyl group, p=1, and q=3), 4-isocyanate butyltrimethoxysilane (X=methoxy group, p=3, and q=4), 4-isocyanate butyltriethoxysilane (X=ethoxy group, p=3, and q=4), 2-isocyanate ethyltrimethoxysilane (X=methoxy group, p=3, and q=2), and 2-isocyanate ethyltriethoxysilane (X=ethoxy group, p=3, and q=2).

From the viewpoint of availability, the compound (1) is preferably 3-isocyanate propyltrimethoxysilane or 3-isocyanate propyltriethoxysilane.

As the compound (1), one type may be used alone, or two or more types may be used in combination.

The monomer (a2-3A) can be obtained by reacting the monomer (a2-1) with the compound (1) in a solvent not having active hydrogen reactive with an isocyanate group of the compound (1) (e.g. ethyl acetate, methyl ethyl ketone or xylene).

The ratio of the compound (1) to the monomer (a2-1) is such that the compound (1) is preferably from 0.1 to 10 mol, more preferably from 0.5 to 5 mol, per 1 mol of the hydroxy group. When the compound (1) is at least 0.1 mol per 1 mol of the hydroxy group, curing tends to easily proceed during the formation of a cured coating film layer as the amount of the alkoxysilyl group increases. When the compound (1) is at most 10 mol per 1 mol of the hydroxy group, an unreacted compound (1) can easily be prevented from remaining in a substantial amount in the cured coating film layer, whereby the durability, weather resistance, scratch resistance and impact resistance of the cured coating film layer will be improved.

The reaction of the hydroxy group of the monomer (a2-1) with the isocyanate group of the compound (1) can be carried out in a yield of substantially 100%, but in order to further increase the reaction rate, the reaction may be carried out in a state where the compound (1) is excessive. In such a case, after removing the compound (1) from the reaction product, the polymerization reaction may be carried out to produce the fluoropolymer (A), or the polymerization reaction may be carried out in such a state that the reaction product contains an unreacted compound (1), to produce the fluoropolymer (A).

The reaction temperature for the reaction of the monomer (a2-1) with the compound (1) is preferably from room temperature to 100°C, more preferably from 50 to 70°C. Further, such a reaction is preferably carried out in an inert atmosphere such as in a nitrogen atmosphere. The reaction time may suitably be changed depending upon the progress of the reaction, and is preferably from 1 to 24 hours, more preferably from 3 to 8 hours. In the reaction system, an organic metal catalyst such as an organic tin compound, an organic aluminum compound, an organic zirconium compound or an organic titanate compound, may preferably be present for the purpose of accelerating the reaction.

Further, the monomer (a2-3) may be a monomer obtainable by reacting a compound having an alkoxysilyl group and a functional group reactive with a carboxy group, with the monomer (a2-2). For example, a monomer may be mentioned which is obtained by reacting a compound having an isocyanate group of the compound (1) substituted by an epoxy group, a hydroxy group or an amino group, with the monomer (a2-2).

As the monomer (a2-3), one type may be used alone, or two or more types may be used in combination.

The monomer (a2-4) may, for example, be an aminovinyl ether represented by CH₂=C-O-(CH₂)ₓ-NH₂ (x=0 to 10); an allyl amine represented by CH₂=CH-O-CO(CH₂)_{y}-NH₂ (y=1 to 10); aminomethyl styrene, vinyl amine, acrylamide, vinyl acetamide, or vinyl formamide.

As the monomer (a2-4), one type may be used alone, or two or more types may be used in combination.

The monomer (a2-5) may, for example, be glycidyl vinyl ether, glycidyl methacrylate, 3,4-epoxycyclohexylmethyl methacrylate, 3,4-epoxycyclohexylmethyl vinyl ether or 4-vinyloxymethylcyclohexylglycidyl ether.

As the monomer (a2-5), one type may be used alone, or two or more types may be used in combination.

The monomer (a2-6) may, for example, be 2-isocyanate ethyl methacrylate, 2-isocyanate ethyl acrylate, 2-isocyanate ethylethoxy methacrylate or 2-isocyanate ethyl vinyl ether.

As the monomer (a2-6), one type may be used alone, or two or more types may be used in combination.

The monomer (a2) is preferably the monomer (a2-1) or the monomer (a2-3), more preferably a hydroxyalkyl vinyl ether, an ethylene glycol monovinyl ether or the monomer (a2-3A), further preferably 2-hydroxyethyl vinyl ether, 4-hydroxybutyl vinyl ether, diethylene glycol monovinyl ether or the monomer (a2-3A), since the mutual copolymerizability with a fluoroolefin is excellent, and the weather resistance, scratch resistance and impact resistance of the cured coating film layer to be formed, will be improved.

### Units (A2-2):

The units (A2-2) are units to be formed by a functional group conversion of a polymer. A polymer having units (A2-2) can be obtained by a method wherein a monomer having a reactive functional group is copolymerized with e.g. a fluoroolefin to produce a polymer having a reactive functional group, and then to the reactive functional group in the polymer, a compound having a crosslinkable group and a functional group reactive to bond with the reactive functional group, is reacted to convert the reactive functional group to the crosslinkable group.

The reactive functional group of the monomer having the reactive functional group is preferably a hydroxy group, a carboxy group, an amino group, an epoxy group or an isocyanate group. Among them, a hydroxy group or a carboxy group is preferred, and a hydroxy group is particularly preferred. The monomer having a reactive functional group may, for example, be the above-mentioned monomer (a2-1), the monomer (a2-2), the monomer (a2-4), the monomer (a2-5) or the monomer (a2-6).

The functional group in the compound having a crosslinkable group and a functional group reactive to bond with the reactive functional group may, for example, be an isocyanate group, a carboxy group or its reactive derivative group (such as a halocarbonyl group) or an epoxy group, when the reactive functional group is a hydroxy group. When the reactive functional group is a carboxy group, an isocyanate group, an amino group or an epoxy group may, for example, be mentioned. When the reactive functional group is an amino group, an isocyanate group, a carboxy group or an epoxy group may, for example, be mentioned. When the reactive functional group is an isocyanate group, a hydroxy group, a carboxy group, an amino group or an epoxy group, may, for example, be mentioned. The crosslinkable group in the compound having a crosslinkable group and a functional group reactive to bond with the reactive functional group, may be the above-mentioned crosslinkable group. However, the crosslinkable group and the functional group reactive to bond with the reactive functional group, are required to be a non-reactive combination.

The compound having a crosslinkable group and a functional group reactive to bond with the reactive functional group may be a compound which reacts with the reactive functional group of a polymer to form a crosslinkable group anew. For example, a dicarboxylic acid anhydride is a compound which reacts with e.g. a hydroxy group to form a carboxy group (crosslinkable group).

For example, in a case where a polymer having an alkoxysilyl group as a crosslinkable group, is produced by a functional group conversion from a polymer having a hydroxy group, the production can be carried out by reacting a compound having an alkoxysilyl group and an isocyanate group. As the compound having an alkoxysilyl group and an isocyanate group, the above compound (1) is preferred. The reaction for such a functional group conversion can be carried out in the same manner as the above reaction of the hydroxyl group of the monomer (a2-1) with the compound (1). Otherwise, a polymer having an alkoxysilyl group can be likewise produced by reacting a compound having, instead of the isocyanate group of the above compound (1), a functional group reactive with the hydroxy group, such as a carboxy group or its reactive derivative group, or an epoxy group.

Further, by using the compound (1), a polymer having an alkoxysilyl group can be produced by a functional group conversion in the same manner as described above, from e.g. a polymer having a carboxyl group, a polymer having an amino group, or a polymer having an epoxy group.

Further, the functional group conversion can be carried out by using, instead of the above compound (1), a reactive compound having a crosslinkable group other than an alkoxysilyl group. For example, by reacting a polybasic carboxylic acid anhydride to a polymer having a hydroxy group, the hydroxy group can be converted to a carboxy group.

By the above functional group conversion, all of reactive functional groups in a polymer may be converted, or some of them may be converted. For example, it is possible to convert some of hydroxy groups in the polymer having hydroxy groups to carboxy group, to produce a polymer having hydroxy groups and carboxy groups.

The units (A2) may have a fluorine atom. That is, at least one hydrogen atom bonded to carbon atoms constituting the units (A2) may be substituted by a fluorine atom.

The units (A2) contained in the fluoropolymer (A) may be of one type, or of two or more types.

### (Units (A3))

In the present invention, the fluoropolymer (A) may optionally contain, in addition to the units (A1) and (A2), units (A3) being units other than the units (A1) and (A2). A monomer (a3) capable of forming units (A3) is a monomer other than the above-mentioned fluoroolefin and the monomer (a2). As the monomer (a3), a monomer not containing the above crosslinkable group or reactive functional group, is preferred.

As the monomer (a3), a monomer (a3-1) is preferred which is copolymerizable with a fluoroolefin and the monomer (a2) and which is capable of providing a function to improve the adhesion between the cured coating film layer and a layer or surface on which the cured coating film layer is formed in the reflective substrate.

The monomer (a3-1) is preferably a vinyl ether, a vinyl ester or an allyl ether.

Specifically, a preferred monomer (a3-1) may, for example, be a vinyl ester such as vinyl acetate, vinyl pivalate or vinyl benzoate; a vinyl ether such as ethyl vinyl ether, butyl vinyl ether, 2-ethylhexyl vinyl ether, or cyclohexyl vinyl ether; or an allyl ether such as ethyl allyl ether, butyl allyl ether, or cyclohexyl allyl ether.

Further, as the monomer (a3) other than the monomer (a3-1), an olefin such as ethylene or isobutylene is preferred with a view to improving the solubility in a solvent, etc.

The units (a3) contained in the fluoropolymer (A) may be units of one type, or two or more types.

The fluoropolymer (A) is a polymer which comprises the units (A1) and (A2) as the essential units and which optionally contains the units (A3) as the case requires. That is, as the fluoropolymer (A), it is possible to use one or both of a polymer comprising the units (A1) and (A2), and a polymer comprising the units (A1), (A2) and (A3).

The content of the units (A1) in the fluoropolymer (A) is preferably from 5 to 95 mol%, more preferably from 10 to 90 mol%, based on the total content of the units (A1) and (A2). When the content of the units (A1) is at least 5 mol%, the weather resistance of the cured coating film layer to be formed, will be improved. When the content of the units (A1) is at most 95 mol%, the compatibility with the after-described curing agent (B) will be good, and it is possible to form a dense cured coating film layer at the time of curing, and the heat resistance, moisture resistance and impact resistance of the cured coating film layer to be formed, will be improved.

The content of the units (A2) in the fluoropolymer (A) is preferably from 5 to 95 mol%, more preferably from 10 to 90 mol%, based on the total content of the units (A1) and (A2). If the content of the units (A2) is at least 5 mol%, the crosslinking density with the after-described curing agent (B) will be high, and it is possible to form a dense cured coating film layer at the time of curing, and the heat resistance, moisture resistance and impact resistance of the cured coating film layer to be formed, will be improved. When the content of the units (A2) is at most 95 mol%, the stability of the fluoropolymer (A) will be improved, and the pot life of the coating material composition will be improved.

From the viewpoint of the weather resistance of the cured coating film, the content of the units (A1) in the fluoropolymer (A) is preferably from 10 to 90 mol%, more preferably from 20 to 80 mol%, most preferably from 30 to 70 mol%, based on the total of all units in the fluoropolymer (A).

Further, with a view to improving the heat resistance, moisture resistance, scratch resistance and impact resistance of the cured coating film by increasing the crosslinking density with the after-described curing agent component (B), the content of the units (A2) in the fluoropolymer (A) is preferably from 1 to 70 mol%, more preferably from 3 to 50 mol%, particularly preferably from 5 to 30 mol%, based on the total of all units in the fluoropolymer (A).

The content of the units (A3) in the fluoropolymer (A) is preferably from 0 to 60 mol%, more preferably from 0 to 50 mol%, based on the total of all units in the fluoropolymer (A). The units (A3) are an optional component, and the content of the units (A3) being 0 mol% means that the units (A3) are not contained. In a case where the units (A3) are contained, the lower limit of the content is more than 0 mol%, preferably 0.5 mol%. When the content of the units (A3) is at most 60 mol%, the weather resistance of the cured coating film layer will not decrease, and the adhesion to e.g. the reflective substrate will be improved.

The contents of the respective units in the fluoropolymer (A) can be controlled by the feeding amounts of the respective monomers and the reaction conditions in the polymerization reaction to obtain the fluoropolymer (A).

### (Methods for producing fluoropolymer (A))

The following methods (α1) and (α2) are preferred as methods for producing the fluoropolymer (A). The method (α1) is a method for producing a fluoropolymer (A) having units (A2-1), and the method (α2) is a method for producing a fluoropolymer (A) having units (A2-2).
(α1): A method of copolymerizing a fluoroolefin with the monomer (a2) and, as the case requires, the monomer (a3).
(α2): A method of copolymerizing at least one monomer selected from the group consisting of the monomer (a2-1), the monomer (a2-2), the monomer (a2-4), the monomer (a2-5) and the monomer (a2-6), with a fluoroolefin and, as the case requires, the monomer (a3), and then, reacting, to the obtained polymer a compound having a crosslinkable group and a functional group reactive to bond with the reactive functional group in the polymer.

### Method (α1):

For the copolymerization in the method (α1), a known radical polymerization method may be employed. As its polymerization system, solution polymerization, suspension polymerization or emulsion polymerization may, for example, be employed.

The reaction temperature for the polymerization may vary depending upon a radical polymerization initiator to be used, but it is preferably from 0 to 130°C. The reaction time is preferably from 1 to 50 hours.

As the solvent, for example, ion-exchanged water; an alcohol solvent such as ethanol, butanol or propanol; a saturated hydrocarbon solvent such as n-hexane or n-heptane; an aromatic hydrocarbon solvent such as toluene or xylene; a ketone solvent such as methyl ethyl ketone or cyclohexanone; or an ester solvent such as ethyl acetate or butyl acetate, may, for example, be used.

As a radical polymerization initiator, for example, a peroxydicarbonate such as diisopropyl peroxy dicarbonate or di-n-propyl peroxy dicarbonate; a peroxy ester such as t-hexyl peroxy pivalate or t-butyl peroxy pivalate; a ketone peroxide such as cyclohexanone peroxide or methyl ethyl ketone peroxide; a peroxy ketal such as 1,1-bis(t-hexylperoxy)cyclohexane or 1,1-bis(t-butylperoxy)cyclohexane; a peroxy carbonate ester such as t-hexylperoxy-n-butyl carbonate or t-butylperoxy-n-propyl carbonate; a diacyl peroxide such as isobutyryl peroxide or lauroyl peroxide; or a dialkyl peroxide such as dicumyl peroxide or di-t-butyl peroxide, may, for example, be used.

In the case of emulsion polymerization, polymerization can be carried out in water in the presence of an anionic or nonionic emulsifier by using an initiator such as a water-soluble peroxide, a persulfate or a water-soluble azo compound.

During the polymerization reaction, a very small amount of hydrochloric acid or hydrofluoric acid may be formed, and therefore, at the time of polymerization, it is preferred that a buffer is preliminarily added.

### Method (α2):

The method (α2) comprises the following steps (α2-1) and (α2-2).
Step (α2-1): A step of copolymerizing at least one monomer selected from the group consisting of the monomer (a2-1), the monomer (a2-2), the monomer (a2-4), the monomer (a2-5) and the monomer (a2-6), with a fluoroolefin and, as the case requires, the monomer (a3).
Step (α2-2): A step of reacting, to the polymer having a reactive functional group obtained in the step (α2-1), a compound having a crosslinkable group and a functional group reactive to bond with the reactive functional group.

As the monomer to be copolymerized with the fluoroolefin in the step (α2-1), the monomer (a2-1) or the monomer (a2-2) is preferred. As the compound having a crosslinkable group and a functional group reactive to bond with the reactive functional group in the polymer, the above compound (1) is preferred.

Now, as an example of the method (α2), a case of using the monomer (a2-1) and the compound (1) will be described.

In the step (α2-1), the copolymerization of the fluoroolefin, the monomer (a2-1) and, as the case requires, the monomer (a3) can be carried out by the same method as the copolymerization in the method (α1).

Further, in the step (α2-2), the reaction of the polymer obtained in the step (α2-1) with the compound (1) can be carried out in the same method as the method for producing the above-mentioned monomer (a2-3A) except that such a polymer is employed instead of a monomer (a2-1).

In a case where the fluoropolymer (A) having an alkoxysilyl group is produced by using the compound (1), the production is preferably carried out by the method (α2), whereby the production is easy. In the production by the method (α1) wherein the monomer (a2-3A) is employed, it is required to severely control and adjust the polymerization conditions in order to prevent gelation during the production.

Further, the method for producing the fluoropolymer (A) is not limited to the above-described methods (α1) and (α2). For example, a fluoropolymer (A) having an alkoxysilyl group may be produced by reacting the compound (1) to a commercially available fluororesin such as "LUMIFLON" tradename (manufactured by Asahi Glass Company, Limited), "FLUONATE" tradename (manufactured by Dainippon Ink and Chemicals), "CEFRAL COAT" tradename (manufactured by Central Glass Co., Ltd.), "ZAFLON" tradename (manufactured by Toagosei Co., Ltd.) or "ZEFFLE" tradename (manufactured by Daikin Industries, Ltd.).

### [Curing agent (B)]

The curing agent (B) is reacted with the crosslinkable group of the fluoropolymer (A) to form a crosslinked structure thereby to perform a role of curing a coating layer formed by applying the coating composition, to obtain a cured coating film layer. As the curing agent (B), depending upon the type of the curable group of the fluoropolymer (A), a compound having at least two functional groups having reactivity to the crosslinkable group, is suitably selected. As the curing agent, a metal alkoxide (B-1), an isocyanate type curing agent (B-2), a blocked isocyanate type curing agent (B-3) or an amino resin (B-4) is preferred.

In a case where the fluoropolymer (A) has a hydroxy group, as the curing agent (B), a metal alkoxide (B-1), an isocyanate type curing agent (B-2), a blocked isocyanate type curing agent (B-3) or an amino resin (B-4) is preferred.

In a case where the fluoropolymer (A) has a carboxy group, as the curing agent (B), an amine type curing agent or an epoxy type curing agent may, for example, be mentioned.

In a case where the fluoropolymer (A) has an amino group, as the curing agent (B), a carboxy group-containing curing agent, an epoxy type curing agent or an acid anhydride type curing agent may, for example, be mentioned.

In a case where the fluoropolymer (A) is an epoxy group, as the curing agent (B), a carboxy group-containing curing agent, an acid anhydride type curing agent or an amine type curing agent may, for example, be mentioned.

In a case where the fluoropolymer (A) has an alkoxysilyl group, as the curing agent (B), a metal alkoxide (B-1) is preferred.

In a case where the fluoropolymer (A) has an isocyanate group, as the curing agent (B), a hydroxy group-containing curing agent or a carboxy group-containing curing agent may, for example, be mentioned.

### <Metal alkoxide (B-1)>

As the metal or metalloid in the above metal alkoxide, Al, Ti or Si may, for example, be mentioned, and Si is preferred since a harder cured coating film layer can thereby be formed, as the durability such as heat resistance, moisture resistance or water resistance, the weather resistance, the scratch resistance and the impact resistance will be improved.

As the alkoxy group in the metal alkoxide, a C₁₋₁₀ alkoxy group is preferred, and a methoxy group or an ethoxy group is more preferred. A methoxy group is particularly preferred. As the metal alkoxide, a compound represented by the following formula (2) (hereinafter referred to as "the compound (2)") is preferred.

(R²)₄₋ₖSi(OR³)ₖ (2)

(In the above formula (2), each of R² and R³ which are independent of each other, is a C₁₋₁₀ monovalent hydrocarbon group, and k is an integer of from 2 to 4.)

The monovalent hydrocarbon group for R² may have a substituent. That is, some or all of hydrogen atoms in the monovalent hydrocarbon group for R² may be substituted by substituents. As such substituents, halogen atoms are preferred, and fluorine atoms are more preferred.

R² is preferably a methyl group, an ethyl group, a hexyl group, a decyl group, a phenyl group or a trifluoropropyl group. In a case where a plurality of R² are present in the compound (2), the plurality of R² are preferably the same from the availability of the raw material. However, the plurality of R² may be different from one another.

The monovalent hydrocarbon group for R³ is a C₁₋₁₀ alkyl group, preferably a methyl group or an ethyl group, particularly preferably a methyl group. In a case where a plurality of R³ are present in the compound (2), the plurality of R³ are preferably the same from such a viewpoint that the reactivity of the alkoxy groups becomes the same, whereby it is easy to uniformly form a cured coating film layer. However, the plurality of R³ may be different from one another.

In the compound (2), k is an integer of from 2 to 4, preferably from 3 to 4.

Specifically, the compound (2) may, for example, be a tetrafunctional alkoxysilane such as tetramethoxysilane, tetraethoxysilane or tetraisopropoxysilane; a trifunctional alkoxysilane such as methyltrimethoxysilane, methyltriethoxysilane, phenyltrimethoxysilane, phenyltriethoxysilane, hexyltrimethoxysilane, hexyltriethoxysilane, decyltrimethoxysilane, or trifluoropropyltrimethoxysilane; or a bifunctional alkoxysilane such as dimethyldimethoxysilane, diphenyldimethoxysilane, dimethyldiethoxysilane or diphenyldiethoxysilane. Among them, tetramethoxysilane, tetraethoxysilane, methyltrimethoxysilane, methyltriethoxysilane or phenyltrimethoxysilane is preferred from the viewpoint of the curing speed, and the physical properties of the obtainable cured coating film layer.

As the compound (2), one type may be used alone, or two or more types may be used in combination.

The compound (2) may be used in the form of a partially hydrolyzed condensate. Such a partially hydrolyzed condensate is a compound obtained by partially hydrolyzing and condensing the above compound (2) so that at least two hydrolyzable groups (-OR³ groups) will remain in the molecule. The entire structure of such a partially hydrolyzed condensate is not clearly understood, but is a polysilicic acid ester comprising a skeleton composed of a -Si-O- bond and an alkoxy group, and such a skeleton may have a straight chain structure, a branched chain structure or a cyclic structure.

The poorer the condensation degree, the better for the partially hydrolyzed condensate of the compound (2). The lower the condensation degree of the partially hydrolyzed condensate, the better the compatibility with the fluoropolymer (A). Further, the thermal expansion coefficient of the cured coating film layer to be formed and the thermal expansion coefficient of the reflective substrate or the like tend to be closer, and peeling of the cured coating film layer from the reflective substrate or the like due to expansion or shrinkage by heat is less likely to occur.

The method for producing the partially hydrolyzed condensate of the compound (2) is not particularly limited, and a known method for producing a partially hydrolyzed condensate may be employed. For example, a method may be mentioned wherein at least one member selected from the group consisting of water, an acid and a solvent is added to the compound (2) to partially hydrolyze and condense it.

As the partially hydrolyzed condensate of the compound (2), ones different in the condensation degree, the structure and the type of the alkoxy groups, are commercially available. For example, condensates having an effective silica content of from about 28 to 52 mass%, such as "KR-500", "KR-510" and "KR-213" tradenames (manufactured by Shin-Etsu Chemical Co., Ltd.), "MKC Silicate MS51" and "MKC Silicate MS56" tradenames (manufactured by Mitsubishi Chemical Corporation), and "M Silicate 51", "Ethylsilicate 40" and "Ethylsilicate 45" tradenames (manufactured by Tama Chemicals Co., Ltd.), or ones having such condensates dissolved in ethanol or isopropanol, such as "HAS-1", "HAS-6" and "HAS-10" tradenames (manufactured by Colcoat Co., Ltd.) may, for example, be mentioned. The above "effective silica content" is a value representing the content of silica calculated as SiO₂, when the polyalkyl silicate contained in the product is regarded as 100 mass%.

As the partially hydrolyzed condensate of the compound (2), one type may be used alone, or two or more types may be used in combination.

The aluminum alkoxide may, for example, be aluminum isopropoxide (AI[O-CH(CH₃)₂]₃).

The titanium alkoxide may, for example, be titanium butoxide (Ti(O-C₄H₉)₄).

Further, such an aluminum alkoxide or titanium alkoxide may be partially hydrolyzed and condensed so that at least two hydrolyzable groups will remain in the molecule, and such a partially hydrolyzed condensate may be used. With such a partially hydrolyzed condensate, the lower the condensation degree, the better, from such a viewpoint that the compatibility with the fluoropolymer (A) is thereby improved, and peeling of the cured coating film layer from the reflective substrate or the like is less likely to occur.

### <Isocyanate type curing agent (B-2)>

The isocyanate type curing agent may, for example, be non-yellowing polyisocyanate or a non-yellowing polyisocyanate modified product.

The non-yellowing polyisocyanate may, for example, be an alicyclic polyisocyanate such as isophorone diisocyanate (IPDI) or dicyclohexylmethane diisocyanate (HMDI); or an aliphatic polyisocyanate such as hexamethylene diisocyanate (HDI).

As the non-yellowing polyisocyanate modified product, for example, the following modified products (b1) to (b4) may be mentioned.
(b1) An isocyanurate of an aliphatic diisocyanate or an alicyclic diisocyanate.
(b2) A modified product having a structure represented by -X-C(=O)-NH-, and having an aliphatic diisocyanate or an alicyclic diisocyanate modified with a polyol or a polyamine.
(b3) A modified product having a structure represented by -X-C(=O)-NH-, and having some of isocyanate groups in the isocyanurate of an aliphatic diisocyanate or an alicyclic diisocyanate modified with a polyol.
(b4) A modified product composed of a mixture of the modified product (b1) and the modified product (b2).

Here, X in -X-C(=O)-NH- is an organic group derived from a compound having a hydroxy group or a compound having an amino group. The compound having a hydroxy group or the compound having an amino group preferably has from 2 to 3 functional groups.

### <Blocked isocyanate type curing agent (B-3)>

The blocked isocyanate type curing agent is a blocked isocyanate type curing agent having an isocyanate group of the above-mentioned isocyanate type curing agent (B-2) blocked. Blocking of the isocyanate group can be carried out e.g. epsilon caprolactam (E-CAP), methyl-ethyl ketone oxime (MEK-OX), methyl isobutyl ketone oxime (MIBK-OX), pyralidine or triazine (TA).

### <Amino resin (B-4)>

The amino resin may, for example, be a melamine resin, a guanamine resin, a sulfone amide resin, an urea resin or an aniline resin. Among them, a melamine resin is preferred in that the curing rate is high.

The melamine resin may specifically be an alkyl etherified melamine resin. Among them, a melamine resin substituted by a methoxy group and/or a butoxy group may be more preferably used.

The coating composition of the present invention may be a two-part coating composition which contains no curing agent (B) so that the curing agent (B) is added immediately before forming a cured coating film layer, or may be a one-part coating composition containing the fluoropolymer (A) and the curing agent (B) together. Further, in a case where the fluoropolymer (A) has alkoxysilyl groups, the curing agent (B) may not be contained, since the alkoxysilyl groups will undergo a condensation reaction to one another.

At the time of using the coating composition of the present invention, the content of the fluoropolymer (A) is preferably from 10 to 90 mass%, more preferably from 20 to 80 mass%, further preferably from 30 to 70 mass%, based on the total content of the fluoropolymer (A) and the curing agent (B).

When the content of the fluoropolymer (A) is at least 10 mass%, the weather resistance of the cured coating film layer will be improved. When the content of the fluoropolymer (A) is at most 90 mass%, it becomes easy to prevent cracking of the cured coating film layer, and the adhesion between the cured coating film and a layer on which the cured coating film layer is formed will be improved. Further, it becomes easy to form a cured coating film layer excellent in durability, scratch resistance and impact resistance.

The combination of the fluoropolymer (A) and the curing agent (B) in the coating composition of the present invention is preferably either (i) a coating composition wherein as the fluoropolymer (A), a fluoropolymer having a hydroxy group is employed, and as the curing agent (B), at least one member selected from an isocyanate type curing agent (B-2), a blocked isocyanate type curing agent (B-3) and an amino resin (B-4) is employed, or (ii) a coating composition wherein as the fluoropolymer (A), a fluoropolymer having at least one of an alkoxysilyl group and a hydroxy group, is employed, and as the curing agent (B), a metal alkoxide (B-1) is employed, from such a viewpoint that it is thereby easy to form a cured coating film layer having a higher hardness and better durability such as heat resistance or water resistance, weather resistance, abrasion resistance and impact resistance.

Further, in a case where the fluoropolymer (A) has alkoxysilyl groups, a coating composition containing no curing agent (B) may also be preferred, since alkoxysilyl groups will undergo a condensation reaction to one another.

### [Curing catalyst (C)]

Further, the coating composition of the present invention may contain a curing catalyst (C) for the purpose of accelerating the curing reaction or imparting good chemical properties and physical properties to a cured coating film layer as a cured product. Especially in order to cure the composition at a low temperature in a short time, it is preferred to incorporate the curing catalyst (C). As such a curing catalyst (C), for example, the following curing catalysts (C-1), (C-2) and (C-3) may be mentioned.

Curing catalyst (C-1): A curing catalyst to be used for a crosslinking reaction between a fluoropolymer containing a hydroxy group and an isocyanate type curing agent or a blocked isocyanate type curing agent.

Curing catalyst (C-2): A curing catalyst to be used for a crosslinking reaction between a fluoropolymer containing at least one of an alkoxysilyl group and a hydroxy group, and a metal alkoxide.

Curing catalyst (C-3): A curing catalyst to be used for a crosslinking reaction between a fluoropolymer containing a hydroxy group, and an amino resin.

As the curing catalyst (C-1), a tin catalyst such as tin octylate, tributyltin dilaurate or dibutyltin dilaurate is preferred.

The curing catalyst (C-2) may, for example, be an acidic phosphoric acid ester such as phosphoric acid monoester or phosphoric acid diester; and an acidic boric acid ester such as boric acid monoester or boric acid diester; an amine adduct such as an addition reaction product of an acidic phosphoric acid ester and an amine, or an addition reaction product of a carboxylic acid compound and an amine; a metal ester such as tin octylate, or dibutyltin dilaurate; a metal chelate such as aluminum tris(acetylacetonate), or zirconium tetrakis(acetyl acetonate); or a metal alkoxide such as aluminum isopropoxide or titanium butoxide. Among them, from the viewpoint of the curing property and smoothness of a cured coating film layer to be formed, an acidic phosphoric acid ester is preferred, and from the viewpoint of the curing property, and smoothness and water resistance, etc. of a cured coating film layer to be formed, a C₁₋₈ monoalkyl phosphate, a C₁₋₈ dialkyl phosphate or a mixture thereof is more preferred.

As the curing catalyst (C-3), a blocked acid catalyst is preferred. As the blocked acid catalyst, various amine salts of a carboxylic acid, sulfonic acid, phosphoric acid, etc. may be mentioned. Particularly preferred is a higher alkyl-substituted sulfonic acid amine salt, such as a diethanolamine salt or a triethylamine salt of p-toluene sulfonic acid or dodecylbenzene sulfonic acid.

As the curing catalyst (C), one type may be used alone, or two or more types may be used in combination.

The content of the curing catalyst (C) is preferably from 0.00001 to 10 mass% based on the total amount of the solid content in the coating composition at the time of use (including the curing agent (B)). When the content of the curing catalyst (C) is at least 0.00001 mass%, it will be easy to obtain the catalytic effects sufficiently. When the content of the curing catalyst (C) is at most 10 mass%, it is unlikely that a remaining curing catalyst (C) will adversely affect the cured coating film layer, and the heat resistance and water resistance will be improved.

### [Resin (D)]

The coating composition of the present invention may contain a resin (D) other than the fluoropolymer (A). However, in the case of the coating composition to be applied to the reflective surface side of the reflective substrate, the type and content of the resin (D) are selected for use so that the transmittance of sunlight will be high, and the reflectance of the reflective plate will not be decreased too much.

Among the above resins (D), the resin (D1) to be incorporated to the coating composition to be applied on the reflective surface side of the reflective substrate may, for example, be a polysiloxane, a silicone resin, an acryl silicone resin, an acryl resin, an acryl polyol resin or a fluororesin other than the fluoropolymer (A). Further, among the above resins (D), the resin (D2) to be incorporated to the coating composition to be applied to the non-reflective surface side of the reflective substrate may, for example, be, in addition to the above resin (D1), a polyester resin, a polyester polyol resin, a polycarbonate resin, an urethane resin, an alkyd resin, an epoxy resin or an oxetane resin.

The resin (D) may be a resin which has a crosslinkable group and which can be crosslinked and cured by the curing agent (B).

The content of the resin (D1) in the coating composition to be applied on the reflective surface side of the reflective substrate is preferably from 1 to 200 parts by mass, per 100 parts by mass of the fluoropolymer (A).

The content of the resin (D2) in the coating composition to be applied to the non-reflective surface side of the reflective substrate is preferably from 1 to 200 parts by mass, per 100 parts by mass of the fluoropolymer (A).

### [Component (E)]

The coating composition of the present invention may contain a component (E) other than the fluoropolymer (A), the curing agent (B), the curing catalyst (C) and the resin (D).

The component (E) may, for example, be a silane coupling agent to improve the adhesion of the cured coating film layer; a photostabilizer such as a hindered amine type photostabilizer; an organic ultraviolet absorber such as a benzophenone type compound, a benzotriazole type compound, a triazine type compound or a cyanoacrylate type compound; an inorganic ultraviolet absorber such as titanium oxide, zinc oxide or cerium oxide; a delustering agent such as ultrafine synthetic silica; a nonionic, cationic or anionic surfactant; or a leveling agent.

The content of the component (E) may suitably be selected within a range not to impair the effects of the present invention.

The coating composition of the present invention is preferably a composition to be coated on the reflective surface side of the reflective substrate to form a cured coating film layer to protect the reflective surface. However, the coating composition of the present invention may be a composition to be applied to the non-reflective surface side of the reflective substrate. In a case where the coating composition of the present invention is a composition to be applied on the non-reflective surface side of the reflective substrate, it is preferred that as the component (E), a pigment component is contained for the purpose of corrosion prevention, coloring, reinforcement, etc. of the cured coating film layer to be formed.

As such a pigment component, at least one pigment selected from the group consisting of an anti-corrosive pigment, a coloring pigment and an extender pigment is preferred.

The anti-corrosive pigment is a pigment to prevent corrosion or alteration of the reflective metal layer. A lead-free anti-corrosive pigment is preferred with a view to presenting little load to the environment. The lead-free anti-corrosive pigment may, for example, be zinc cyanamide, zinc oxide, zinc phosphate, calcium magnesium phosphate, zinc molybdate, barium borate or zinc calcium cyanamide.

The coloring pigment is a pigment to color the coating film. The coloring pigment may, for example, be titanium oxide, carbon black or iron oxide.

The extender pigment is a pigment to improve the hardness of the coating film and to increase the thickness. The extender pigment may, for example, be talc, barium sulfate, mica or calcium carbonate.

The content of the pigment component in the coating composition to be applied to the non-reflective surface side of the reflective substrate made of metal is preferably from 50 to 500 mass%, more preferably from 100 to 400 mass%, based on the total amount of the solid content in the coating composition during use (including the curing agent (B)). When the content of the pigment component is at least 50 mass%, the functions of the pigment component can easily be obtainable. When the content of the pigment component is at most 500 mass%, it tends to be less likely that the cured coating film layer is cracked or damaged by an impact of e.g. sand, and the weather resistance of the cured coating film will be improved.

It is preferred that the coating composition to be applied on the reflective surface side of the reflective substrate, does not contain the above pigment component in order to prevent deterioration of the reflectance at the reflective surface.

The content of the pigment component in the coating composition to be applied on the reflective surface side of the reflective substrate is preferably at most 3 mass%, particularly preferably 0%, based on the total amount of the solid content in the coating composition (including curing agent (B)) at the time of its use.

### [Solvent (F)]

The coating composition of the present invention is a composition comprising the above-described respective components to form a cured coating film layer. Further, in order to apply the coating composition of the present invention, it is also possible to use, together with the coating composition of the present invention, a component other than the components to form a cured coating film layer. Particularly, it is preferred to use a solvent (F) as mixed to the coating composition, in order to apply the coating composition. The composition containing the solvent (F) is applied to form a coating film of the coating composition containing the solvent, and then, the solvent (F) is removed to form a coating film of the coating composition.

As such a solvent (F), in order to apply the coating composition of the present invention, a solvent which has been commonly used, such as toluene, xylene, methyl ethyl ketone or butyl acetate, may be used, but from the viewpoint of reducing the environmental load, a weak solvent is preferred.

As such a weak solvent, a weak solvent which is useful at the time of solvent substitution or polymerization of the fluoropolymer (A) is preferred, and mineral spirit or mineral terpene is more preferred.

The content of the solvent (F) in the coating composition containing the solvent (F) may suitably be determined taking into consideration the solubility of the fluoropolymer (A), a proper viscosity, the coating method, etc. at the time of applying the composition as a coating material.

By using the coating composition of the present invention as described above, it is possible to form a hard cured coating film layer containing fluorine atoms and having a crosslinked structure, as a protective layer to protect the reflective substrate made of metal in a solar heat-collecting reflective plate. Such a cured coating film layer has a crosslinked structure and thus is a hard coating film and has excellent scratch resistance and impact resistance, so that it will not be damaged even by impingement of sand, etc. Further, such a cured coating film layer not only has an improved weather resistance as it contains fluorine atoms, but also is a hard coating film having a crosslinked structure, whereby the degree of expansion or shrinkage by heat tends to be small, moisture absorption and water absorption are suppressed, and the heat resistance, water resistance and moisture resistance are further improved. Particularly, even when the cured coating film layer is formed on the reflective surface side of the reflective substrate made of metal in a solar heat-collecting reflective plate and exposed to a high temperature, by virtue of its excellent heat resistance, it is possible to stably prevent deterioration and peeling due to the heat for a long period of time.

### [Solar heat-collecting reflective plate]

The solar heat-collecting reflective plate of the present invention is a reflective plate to reflect sunlight in a solar heat-collecting system which collects solar heat and utilizes it as heat energy.

The solar heat-collecting reflective plate of the present invention is a solar heat-collecting reflective plate having a reflective substrate made of metal and a cured coating film layer formed on a light reflective surface side of the reflective substrate, wherein the cured coating film layer is a cured coating film layer formed from the coating composition of the present invention. The cured coating film layer is preferably formed on the reflective surface side of the reflective substrate from the viewpoint of protection of the reflective substrate or a thin film layer. The cured coating film layer to be formed on the reflective surface side of the reflective substrate is a cured coating film layer having high transparency, and preferably, it does not contain a component to lower the transparency of the cured coating film such as a pigment component.

Further, the solar heat-collecting reflective plate of the present invention may be a solar heat-collecting reflective plate having a reflective substrate made of metal and a cured coating film layer formed on a non-reflective surface side of the reflective substrate, wherein the cured coating film layer is a cured coating film layer formed from the coating composition of the present invention. The cured coating film layer formed on the non-reflective surface side may be opaque, and thus may contain a pigment component such as an anti-corrosive pigment, a coloring pigment, an extender pigment, etc.

Further, the solar heat-collecting reflective plate of the present invention may be a solar heat-collecting reflective plate having a reflective substrate made of metal, a first cured coating film layer formed on a light reflective surface side of the reflective substrate and a second cured coating film layer formed on a non-reflective surface side of the reflective substrate. The first cured coating film layer is required to be a cured coating film layer having high transparency, but the second cured coating film layer may be transparent or opaque.

Further, both sides of the metal substrate may be made to be reflective surfaces. In such a case, on both reflective surface sides, it is preferred to form cured coating film layers having high transparency by using the coating composition of the present invention.

### <Reflective substrate>

In the present invention, the reflective substrate is a portion constituting the main body of the solar heat-collecting reflective plate and is a plate member made of metal. Such a metal may, for example, be aluminum, an aluminum alloy or stainless steel, but from the viewpoint of high reflectance of sunlight, aluminum or an aluminum alloy is preferred.

Since the reflective substrate is made of metal, the solar heat-collecting reflective plate of the present invention has merits that breakage is less likely, the weight can be reduced whereby the installation costs can be reduced and processing such as bending is easy, as compared with a reflective mirror wherein the substrate is glass.

The thickness of the reflective substrate is preferably from 0.1 to 10 mm, more preferably from 0.5 to 5 mm.

With a view to reflecting sunlight with high efficiency, the reflective substrate is preferably such that the surface of the reflective surface side is subjected to mirror finish treatment, or a thin film layer is formed on the reflective surface side.

Such mirror finish is carried out usually by e.g. physical polishing, but may be carried out also by a chemical or electrical polishing method. At that time, it is preferred to carry out the polishing so that the surface roughness Ra of the reflective substrate will be at most 0.3 µm, further preferably at most 0.1 µm.

The above thin film layer is a layer of a thin film made of a simple substance of a metal element, a metal compound or the like and has a function to complement the reflective function of the reflective surface (e.g. to improve the reflectivity of an infrared region light in sunlight). The thin film layer may, for example, be a reflective layer made of a thin film of a simple substance (metal) containing at least one metal element selected from titanium, molybdenum, manganese, aluminum, silver, copper, gold and nickel, or a compound (such as an oxide) containing such a metal element. As the thin film layer, a thin film layer made of titanium oxide is particularly preferred. The thin film layer made of titanium oxide has a function to improve the reflectivity of infrared region light in sunlight.

The thin film layer may be formed by e.g. phosphate treatment, anodizing treatment or vacuum vapor deposition treatment, and its thickness may be made to be e.g. from 5 to 1,500 nm. The thin film layer may be a single layer or two or more layers.

Further, as the reflective substrate in the present invention, it is also possible to employ one obtained by applying mirror finish to a reflective substrate and further forming a thin film layer.

The reflective substrate is preferably a reflective substrate wherein a plate member made of aluminum or an aluminum alloy is used as a substrate, and the surface on the reflective surface side of the substrate is mirror-finished, a reflective substrate wherein a plate member made of aluminum or an aluminum alloy is used as a substrate, and a thin film layer is formed on the reflective surface side of the substrate, or a reflective substrate wherein a plate member made of aluminum or an aluminum alloy is used as a substrate, and the surface on the reflective surface side of the substrate is mirror-finished, and a thin film layer is formed on the mirror-finished surface side.

The shape of the reflective substrate is not limited to a plate member having a flat surface and may be a plate member or molded member having a cured surface. The thickness of the plate member or molded member is preferably substantially constant. For example, it may be a hemisphere member, a semicylinder member or a plate member having a paraboloidal surface, and the reflective surface thereof may be inside or outside of the curved surface. Since the substrate of the reflective substrate is metal, molding or processing is easy, and the solar heat-collecting reflective plate of the present invention may be not only a flat mirror but also a curved mirror.

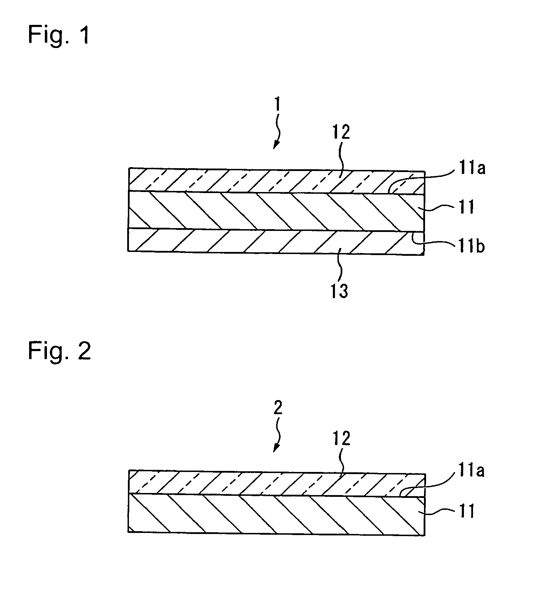

Fig. 1 is a cross-sectional view illustrating a reflective plate 1 as an embodiment of the solar heat-collecting reflective plate (hereinafter referred to simply as "the reflective plate") of the present invention. Fig. 2 is a cross-sectional view illustrating a reflective plate 2 as another embodiment of the reflective plate of the present invention.

### <First embodiment>

As shown in Fig. 1, the reflective plate 1 in this embodiment comprises a reflective substrate 11 having a reflective surface 11 a, a cured coating film layer 12 to protect the reflective surface 11 a side of the reflective substrate 11, and a cured coating film layer 13 to protect the non-reflective surface 11 b side of the reflective substrate 11.

The cured coating film layer 12 is a coating film to protect the reflective surface 11 a side of the reflective substrate 11, and is formed by the above-described coating composition of the present invention. It is preferred that the cured coating film layer 12 is formed by a coating composition which does not contain a pigment.

The thickness of the cured coating film layer 12 is preferably from 3 to 50 µm.

Between the cured coating film layer 12 and the reflective substrate 11 or a thin film layer, another layer may be provided. As such another layer, a resin layer made of an alkyd resin, an epoxy resin, an acryl resin or the like, or a layer made of a silane coupling agent to improve the adhesion between the cured coating film and the reflective substrate or a thin film layer, may, for example, be mentioned.

The cured coating film 13 is a coating film to protect the non-reflective surface 11 b side of the reflective substrate 11 and is formed by the above-described coating composition of the present invention. It is preferred that the cured coating film layer 13 is formed by a coating composition which contains a pigment component.

The thickness of the cured coating film layer 13 is preferably from 3 to 150 µm.

Between the cured coating film layer 13 and the reflective substrate 11, another layer may be provided. As such another layer, a resin layer made of an alkyd resin, an epoxy resin, an acryl resin or the like, or a layer made of a silane coupling agent to improve the adhesion between the cured coating film and the reflective substrate, may, for example, be mentioned.

### (Production process)

The reflective plate 1 can be produced by a known production process except that the coating composition of the present invention is employed.

The process for producing the reflective plate 1 may be a process which comprises forming a layer of the coating composition of the present invention on each of the reflective surface 11a and the non-reflective surface 11b of the reflective substrate 11 and then curing the above coating composition to form the cured coating film layers 12 and 13. A pigment component may be contained in the coating composition to form the cured coating film layer 13.

The application of the coating composition containing the solvent (F) can be carried out by means of a brush, a roller, a spray, a flow coater, an applicator or the like. The application of a coating composition not containing the solvent (F), such as a powder coating material, may be carried out by means of e.g. a powder spray. The amount of the coating composition to be applied may suitably be selected so that the dried film thickness will be within the above-mentioned range. The temperature at the time of heat-curing the coating composition is preferably from room temperature to 350°C, more preferably from 50 to 300°C, further preferably from 100 to 250°C. The cured coating film layers 12 and 13 may be formed simultaneously or sequentially.

The above-described reflective plate 1 has the cured coating film layers 12 and 13 formed by the coating composition of the present invention, and thus has excellent durability, weather resistance, scratch resistance and impact resistance. Especially, the cured coating film layer 12 is formed on the reflective surface 11a side of the reflective plate 1 and thus will be exposed to a high temperature and will have a high frequency of impingement of sand, etc. However, the coating film is hard and excellent in heat resistance, scratch resistance and impact resistance, whereby deterioration and peeling of the coating film are prevented. Thus, the reflective surface 11 a of the reflective substrate 11 will be protected stably for a long period of time.

### <Second embodiment>

The reflective plate 2 in this embodiment is the same as the reflective plate 1 except that the cured coating film layer 13 is not provided on the non-reflective surface 11 b side of the reflective substrate 11. The respective portions in the reflective plate 2 are identified with the same symbols as in the reflective plate 1, and their description will be omitted. The reflective plate 2 is useful particularly in a case where the non-reflective surface side of the reflective plate 2 is not required to be protected, since it is covered by e.g. a fixing member to fix the reflective plate 2.

Also in the reflective plate 2, the reflective surface 11 a of the reflective substrate 11 is protected stably for a long period of time by the cured coating film layer 12 having a hard coating film and being excellent in the weather resistance such as heat resistance, scratch resistance and impact resistance.

The reflective plate 2 can be produced by the same process as for the reflective plate 1 except that the cured coating film layer 13 is not formed.

The reflective plate 2 also has the cured coating film layer 12 like the reflective plate 1, and thus has excellent durability, weather resistance and impact resistance. Therefore, the reflective surface 11 a of the reflective substrate 11 will be protected stably for a long period of time.

Further, also in the reflective plate 2, a thin film layer may be formed between the reflective substrate 11 and the cured coating film layer 12. The thin film layer may be the same as mentioned in the reflective plate 1.

The reflective plate of the present invention is not limited to the above-described reflective plates 1 and 2. For example, another layer may be formed between the reflective substrate 11 and the cured coating film layer 12. Such another layer may, for example, be a layer for the purpose of further increasing the effect for protecting the reflective substrate. Another layer to increase such a protective effect may, for example, be a protective layer disclosed in Patent Document 2. Such another layer may be one layer, or two or more layers.

Further, in a case where the cured coating film layer 13 is formed on the non-reflective surface 11 b side of the reflective substrate 11, another layer to increase the protective effect may be formed between them.

Further, the reflective plate of the present invention may be a reflective plate wherein the cured coating film layer 13 is formed only on the non-reflective surface side of the reflective substrate 11. In such a case, it is preferred that a known protective layer is formed on the reflective surface side of the reflective substrate 11. Likewise, the reflective plate of the present invention may be one wherein the cured coating film layer 12 is formed on the reflective surface side of the reflective substrate 11, and on the non-reflective surface side, a protective layer other than the cured coating film layer of the present invention is formed.

### EXAMPLES

Now, the present invention will be described in detail with reference to Examples. However, it should be understood that the present invention is by no means restricted by the following description.

### <Preparation of fluoropolymer (A)>

### [Example 1]

Into a pressure resistant reactor having an internal capacity of 2,500 mL, made of stainless steel and equipped with a stirrer, 590 g of xylene, 170 g of ethanol, 129 g of 4-hydroxybutyl vinyl ether (HBVE) as the monomer (a2-1), 206 g of ethyl vinyl ether (EVE) and 208 g of cyclohexyl vinyl ether (CHVE) as the monomer (a3), 11 g of calcium carbonate, and 3.5 g of perbutyl perpivalate (PBPV) were charged, and dissolved oxygen in the solution was removed by nitrogen deaeration.

Then, 660 g of chlorotrifluoroethylene (CTFE) as a fluoroolefin was introduced, and the temperature was gradually raised, and while maintaining the temperature at 65°C, the reaction was continued. After the reaction for 10 hours, the reactor was cooled with water to terminate the reaction. The reaction solution was cooled to room temperature, then non-reacted monomers were purged, and the obtained reaction solution was filtered through diatomaceous earth to remove a solid content. Then, a part of xylene and ethanol were removed by reduced pressure distillation to obtain a xylene solution of a hydroxy group-containing fluoropolymer (fluoropolymer (Aa)) (nonvolatile component: 60%).

### [Example 2]

Into an autoclave having an internal capacity of 3,000 mL, made of stainless steel and equipped with a stirrer, 722 g of xylene, 189 g of ethanol, 90.7 g of HBVE as the monomer (a2-1), 284.5 g of CHVE and 202.9 g of 2-ethylhexyl vinyl ether (EHVE) as the monomer (a3), and 9.5 g of potassium carbonate were put all at once, and dissolved oxygen was removed by nitrogen.

Then, 505 g of CTFE as a fluoroolefin was introduced into the autoclave, and the temperature was gradually raised. After the temperature reached 65°C, 7 g of a xylene solution containing 50% of t-butyl peroxypivalate was introduced into the autoclave over a period of 7 hours, followed by stirring for further 15 hours, whereupon the reaction was terminated. Then, potassium carbonate was removed by filtration to obtain a xylene solution of a hydroxy group-containing fluoropolymer (nonvolatile content: 60%, hydroxy value: 36 mgKOH/g). Into a 1 L eggplant-form flask, 600 g of the above xylene solution of the hydroxy group-containing fluoropolymer and 210 g of mineral spirit were added, and while carrying out evaporation, solvent substitution to mineral spirit was carried out to obtain a mineral spirit solution of the hydroxy group-containing fluoropolymer (nonvolatile content: 73.5%).

Into a four necked flask having a capacity of 500 mL and equipped with a thermometer, a reflux condenser and a stirrer, 326.5 g of the above mineral spirit solution of the hydroxy group-containing fluoropolymer, 38.1 g of 3-isocyanate propyl triethoxysilane (IPTES) as the compound (1) and 0.05 g of tin 2-ethyl hexanoate were added, and in a nitrogen atmosphere, a reaction was carried out at 50°C for 5 hours.

The composition of the obtained polymer was measured by H¹-NMR (proton NMR), whereby units derived from CTFE/units derived from CHVE/units derived from EHVE/units derived from HBVE/units having hydroxy groups of units derived from HVBE reacted with isocyanate groups of IPTES (mol%)=50/26/15/1/8.

After the reaction, trimethyl orthoformate (13.6 g), and isopropanol (13.6 g) were added respectively, to obtain a mineral spirit solution of the alkoxysilyl group-containing fluoropolymer (fluoropolymer (Ab)) (nonvolatile content: 70.0%).

### [Example 3]

Into a pressure resistant reactor having an internal capacity of 2,500 mL, made of stainless steel and equipped with a stirrer, 590 g of xylene, 170 g of ethanol, 131.7 g of 4-hydroxybutyl vinyl ether (HBVE) as the monomer (a2-1), 327.1 g of ethyl vinyl ether (EVE) as the monomer (a3), 11 g of calcium carbonate, and 3.5 g of perbutyl perpivalate (PBPV) were charged, and dissolved oxygen in the solution was removed by nitrogen deaeration.

Then, 660 g of chlorotrifluoroethylene (CTFE) as a fluoroolefin was introduced, and the temperature was gradually raised, and while maintaining the temperature at 65°C, the reaction was continued. After the reaction for 10 hours, the reactor was cooled with water to terminate the reaction. The reaction solution was cooled to room temperature, then non-reacted monomers were purged, and the obtained reaction solution was filtered through diatomaceous earth to remove a solid content. Then, a part of xylene and ethanol were removed by reduced pressure distillation to obtain a xylene solution of a hydroxy group-containing fluoropolymer (fluoropolymer (Ac)) (nonvolatile component: 60%).

### <Preparation of coating compositions>

### [Example 4]

59.1 g of the xylene solution of the fluoropolymer (Aa) (nonvolatile component: 60%), 6.3 g of a HDI nurate type polyisocyanate resin ("CORONATE HX" tradename, manufactured by Nippon Polyurethane Industry Co., Ltd.) as the curing agent (B), 32.9 g of xylene as a diluting solvent and dibutyltin dilaurate (one diluted with xylene from 4 to 10 times to 3 g) as the curing catalyst (C) were mixed to obtain a coating composition I.

### [Example 5]

34.0 g of the mineral spirit solution of the fluoropolymer (Ab) (nonvolatile content: 70%), 23.8 g of "KR-500" tradename (manufactured by Shin-Etsu Chemical Co., Ltd.) as the curing agent (B), 2.4 g of a phosphoric acid catalyst ("AP-8" tradename, manufactured by Daihachi Chemical Industry Co., Ltd.) and 0.1 g of a leveling agent ("BYK-300" tradename, manufactured by BYK-Chemie) were mixed to obtain a coating composition II.

### [Example 6]

24.0 g of the xylene solution of the fluoropolymer (Ac) (nonvolatile content: 60%), 3.0 g of a methylated melamine resin ("CYMEL 303" tradename, manufactured by Mitsui Cytec Ltd.) as the curing agent (B), 4.5 g of butyl alcohol, 0.3 g of a p-toluene sulfonic acid solution neutralized by an amine compound ("Catalyst 602" tradename, manufactured by Mitsui Cytec Ltd.) as the curing catalyst (C), 0.1 g of a leveling agent ("BYK-300" tradename, manufactured by BYK-Chemie) and 32.9 g of xylene as a diluting solvent were mixed to obtain a coating composition III.

### [Example 7]

30 g of a phenol novolac type epoxy resin ("JER152" tradename, manufactured by Japan Epoxy Resins Co., Ltd., epoxy equivalent: 177 g/mol, nonvolatile component: 100 mass%), 2.4 g of diethylene triamine as an epoxy resin curing agent, and 17.5 g of xylene as a diluting solvent were mixed to obtain a coating composition IV.

### <Evaluation of coating films (cured coating film layers) formed by coating compositions>

### [Example 8]

The coating composition I obtained in Example 4, was applied on the surface of a glass substrate, so that the film thickness would be 50 µm and aged for one week in a constant temperature chamber at 25°C to form a coating film thereby to obtain a coating film-attached test plate I-1.

Further, the coating composition I was applied on the surface of a mirror-finished aluminum plate so that the film thickness would be from 10 to 15 µm and heat-cured at 200°C for 10 minutes to form a coating film thereby to obtain a coating film-attached test plate I-2.

With respect to the coating film-attached test plate I-1, the heat resistance of the coating film was evaluated. Further, with respect to the coating film-attached test plate I-2, the hardness, water resistance, moisture resistance and accelerated weather resistance tests of the coating film were carried out.

### [Example 9]

In the same manner as in Example 8 except that the coating composition II obtained in Example 5 was used, a coating film-attached test plate II-1 having a coating film formed on a glass substrate, and a coating film-attached test plate II-2 having a coating film formed on the surface of an aluminum plate, were obtained.

With respect to the coating film-attached test plate II-1, the heat resistance of the coating film was evaluated. Further, with respect to the coating film-attached test plate II-2, the hardness, water resistance, moisture resistance and accelerated weather resistance tests of the coating film were carried out.

### [Evaluation methods]

### (Hardness)

The hardness of a coating film was measured by a method in accordance with JIS K5600-5-4 (1999).

### (Water resistance)

A water resistance test of a coating film was carried out by a method in accordance with JIS K5600-6-2 (1999), and evaluation was made in accordance with the following standards.
"O": Swelling, damages, etc. were not observed in the coating film.
"×": Swelling, damages, etc. were observed in the coating film.

### (Moisture resistance)

A moisture resistance test of a coating film was carried out by a method in accordance with JIS K5600-7-2 (1999), and evaluation was made in accordance with the following standards. The heating and moisturizing conditions were such that the temperature was 85°C and the relative humidity was 85%.
"O": Swelling, damages, etc. were not observed in the coating film.
"×": Swelling, damages, etc. were observed in the coating film.

### (Heat resistance (1): Heat decomposition temperature)

Using a differential thermogravimetric measuring apparatus TG/DTA220 (manufactured by Seiko Instruments Inc.), a thermogravimetric analysis was carried out under such conditions that the temperature raising rate was 10°C/min and a nitrogen flow rate was 50 mL/min, and the heat decomposition temperature of a coating film was measured. Here, the temperature at the time when the mass of the coating film decreased by 5% was taken as the heat decomposition temperature (°C).

### (Heat resistance (2): Glass transition temperature (Tg))

Using a thermomechanical analyzer TMA/SS150 (manufactured by Seiko Instruments Inc.), Tg (°C) of a coating film was measured under a condition of a temperature raising rate of 10°C/min. Here, the temperature at which the elongation of the coating film changed abruptly was taken as Tg of the coating film.

### (Accelerated weather resistance)

The accelerated weather resistance test was carried out by a method in accordance with JIS K5600-7-8 (1999). When the value of the gloss immediately before the initiation of the test was taken as 100%, the percentage of the value of the gloss upon expiration of 1,000 hours of the test was calculated as a gloss retention rate (unit: %), and the weather resistance was evaluated in accordance with the following standards.
"O": The gloss retention rate was at least 80%.
"Δ": The gloss retention rate was at least 60% and less than 80%.
"×": The gloss retention rate was less than 60%.

The evaluation results of the coating films in Examples 8 and 9 are shown in Table 1.

**[Table 1]**

| | Example 8 | Example 9 |
|---|---|---|
| Hardness | F | H |
| Water resistance | ○ | ○ |
| Moisture resistance | ○ | ○ |
| Heat resistance (1): heat decomposition temperature [°C] | 220 | 230 |
| Heat resistance (2): Tg [°C] | 50 | 70 |
| Accelerated weather resistance: gloss retention rate [%] | ○ | ○ |

### <Evaluation of coating films (cured coating film layers) formed by coating compositions>

### [Example 10]

Using an aluminum reflective substrate having a titanium oxide layer with a thickness of 10 nm, obtained by mirror-finishing one side of an aluminum plate and then vapor-depositing titanium oxide on the mirror-finished surface, the coating composition I was applied on the surface of the titanium oxide layer so that the film thickness would be from 10 to 15 µm and heat-cured at 200°C for 10 minutes to form a coating film thereby to obtain a coating film-attached test plate III-1. With respect to the obtained coating film-attached test plate III-1, an accelerated weather resistance test of the coating film was carried out.

### [Example 11]

The coating composition II was applied to the surface of the titanium oxide layer of the same aluminum reflective substrate as in Example 10, so that the film thickness would be from 10 to 15 µm and heat-cured at 200°C for 10 minutes to form a coating film thereby to obtain a coating film-attached test plate IV-1. With respect to the obtained coating film-attached test plate IV-1, an accelerated weather resistance test of the coating film was carried out.

### [Example 12]

The coating composition III was applied to the surface of the titanium oxide layer of the same aluminum reflective substrate as in Example 10, so that the film thickness would be from 10 to 15 µm and heat-cured at 200°C for 10 minutes to form a coating film thereby to obtain a coating film-attached test plate V-1. With respect to the obtained coating film-attached test plate V-1, an accelerated weather resistance test of the coating film was carried out.

### [Comparative Example 1]

The coating composition IV was applied on the surface of the titanium oxide layer of the same aluminum reflective substrate as in Example 10, so that the film thickness would be from 10 to 15 µm, and heat-cured at 200°C for 10 minutes to form a coating film thereby to obtain a coating film-attached test plate VI-1. With respect to the obtained coating film-attached test plate VI-1, an accelerated weather resistance test of the coating film was carried out.

### [Evaluation methods]

### (Accelerated weather resistance test)

Using Accelerated Weathering Tester (model: QUV/SE, manufactured by Q-PANEL LAB PRODUCTS), the gloss retention rate of a coating film was evaluated by comparing the initial stage and after the test for 500 hours.

### 1. Gloss retention rate of coating film

The gloss of the coating film surface was measured by means of PG-1 M (gloss meter: manufactured by Nippon Denshoku Industries Co., Ltd.), and the weather resistance was evaluated in accordance with the following standards.
"⊚": The gloss retention rate was at least 80%.
"O": The gloss retention rate was at least 60% and less than 80%.
"Δ": The gloss retention rate was at least 40% and less than 60%.
"×"_{:} The gloss retention rate was less than 40%.

The results of measurement of the gloss retention rate in Examples 11 and 12 and Comparative Example 1 were as follows.
Example 10: ○
Example 11: ⊚
Example 12: ⊚

### Comparative Example 1: ×

As shown in Table 1, the coating films in Examples 8 and 9 formed by the coating compositions of the present invention, had high hardness and were excellent in scratch resistance and impact resistance. Further, they had high heat decomposition temperatures and Tg and thus were excellent also in heat resistance, and they were also excellent in water resistance. Further, in the accelerated weather resistance test, the gloss of the aluminum plate having the coating film formed thereon was maintained at a high level, and thus they had excellent weather resistance.

Further, as compared with the coating film in Example 8 formed by the fluoropolymer (Aa) having a hydroxy group and the isocyanate type curing agent, the coating film in Example 9 formed by the fluoropolymer (Ab) having an alkoxysilyl group and the metal alkoxide, had a higher hardness and superior scratch resistance and impact resistance and was also superior in the heat resistance.

Further, as shown in Examples 10 to 12, with the aluminum reflective plates coated with the coating compositions of the present invention, no abnormality was observed. On the other hand, as shown in Comparative Example 1, with the aluminum reflective plate coated with an epoxy resin composition, deterioration of the gloss retention rate was substantial, and as a result, deterioration in the reflectance was observed.

### INDUSTRIAL APPLICABILITY

The present invention provides a coating composition for surface coating that is used for producing a solar heat-collecting reflective plate to be used for a solar heat-collecting system and that is used for forming a cured coating film layer to protect a reflective surface or non-reflective surface of a reflective substrate made of metal. Further, the solar heat-collecting reflective plate of the present invention is a reflective plate for solar heat collection in a solar heat-collecting system.

The entire disclosure of Japanese Patent Application No. 2010-046757 filed on March 3, 2010 including specification, claims, drawings and summary is incorporated herein by reference in its entirety.

### REFERENCE SYMBOLS

1, 2: Solar heat-collecting reflective plate, 11: Reflective substrate, 11 a: Reflective surface, 11b: Non-reflective surface, 12, 13: Cured coating film layer

## Claims

1. A coating composition for surface coating to be used for the production of a solar heat-collecting reflective plate having a reflective substrate made of metal, which comprises a fluoropolymer (A) having units (A1) derived from a fluoroolefin and units (A2) having a crosslinkable group.

2. The coating composition for surface coating according to Claim 1, which is a coating composition to be used for forming a cured coating film layer on a light reflective surface side of the reflective substrate.

3. The coating composition for surface coating according to Claim 2, which is a coating composition to be used for forming a transparent cured coating film layer.

4. The coating composition for surface coating according to any one of Claims 1 to 3, wherein the units (A2) having a crosslinkable group are units derived from a monomer (a2) having a crosslinkable group.

5. The coating composition for surface coating according to any one of Claims 1 to 4, wherein the units (A1) derived from a fluoroolefin are units derived from at least one fluoroolefin selected from the group consisting of tetrafluoroethylene, chlorotrifluoroethylene, hexafluoropropylene, vinylidene fluoride and vinyl fluoride.

6. The coating composition for surface coating according to any one of Claims 1 to 5, wherein the crosslinkable group is at least one crosslinkable group selected from the group consisting of a hydroxy group, a carboxy group, an amino group, an epoxy group, an alkoxysilyl group and an isocyanate group.

7. The coating composition for surface coating according to any one of Claims 1 to 6, which comprises the fluoropolymer (A) and a curing agent (B).

8. The coating composition for surface coating according to Claim 7, wherein the fluoropolymer (A) is a polymer having at least one crosslinkable group selected from an alkoxysilyl group and a hydroxy group, and the curing agent (B) is a metal alkoxide (B-1).

9. The coating composition for surface coating according to Claim 7, wherein the fluoropolymer (A) is a polymer having a hydroxy group, and the curing agent (B) is at least one curing agent selected from the group consisting of an isocyanate type curing agent (B-2), a blocked isocyanate type curing agent (B-3) and an amino resin (B-4).

10. The coating composition for surface coating according to Claim 1, which is a coating composition to be used for forming a cured coating film layer on a non-reflective surface side of the reflective substrate.

11. The coating composition for surface coating according to Claim 10, which is a coating composition to be used for forming an opaque cured coating film layer.

12. A process for producing a solar heat-collecting reflective plate, which comprises forming a layer of the coating composition for surface coating as defined in any one of Claims 1 to 9 on a light reflective surface side of a reflective substrate made of metal, and then curing the coating composition to form a cured coating film layer.

13. A solar heat-collecting reflective plate having a reflective substrate made of metal, and a cured coating film layer formed on a light reflective surface side of the reflective substrate, wherein the cured coating film layer is a cured coating film layer formed from the coating composition for surface coating as defined in any one of Claims 1 to 9.

14. A solar heat-collecting reflective plate having a reflective substrate made of metal, and a cured coating film layer formed on a non-reflective surface side of the reflective substrate, wherein the cured coating film layer is a cured coating film layer formed from the coating composition for surface coating as defined in Claim 10 or 11.

15. The solar heat-collecting reflective plate according to Claim 13 or 14, wherein the reflective substrate made of metal is a substrate in the form of a plate made of aluminum or an aluminum alloy, and it is a reflective substrate wherein the surface on the light reflective surface side of the substrate is mirror-finished, or a reflective substrate wherein a thin film layer is formed on the light reflective surface side of the substrate.
